# EUROPEAN PATENT SPECIFICATION

(11) **EP 3 982 345 B1**
(45) Date of publication and mention of the grant of the patent: **05.04.2023**
(21) Application number: 22153204.7
(22) Date of filing: 25.01.2022
(51) Int. Cl.: G08G 1/07, G08G 1/087, H04L 67/12, H04L 67/125, H04L 67/52, H04L 67/565, H04L 69/08, H04W 4/02, G08G 1/095

(54) **ANNUNCIATOR CONTROL METHODS, ELECTRONIC DEVICE AND COMPUTER READABLE STORAGE MEDIUM**
VERFAHREN ZUR STEUERUNG VON ANZEIGERN, ELEKTRONISCHES GERÄT UND COMPUTERLESBARES SPEICHERMEDIUM
MÉTHODES DE COMMANDE D'ANNONCEURS, DISPOSITIF ÉLECTRONIQUE ET SUPPORT D'ENREGISTREMENT L LISIBLE PAR L'ORDINATEUR

(30) Priority: 14.05.2021 CN 202110526452
(43) Date of publication of application: 13.04.2022
(73) Proprietor: Apollo Intelligent Connectivity (Beijing) Technology Co., Ltd., Beijing (CN)
(72) Inventor: ZHANG, Chi, Beijing (CN); CHEN, Mingzhi, Beijing (CN); YU, Gao, Beijing (CN); WANG, Chuang, Beijing (CN)
(74) Representative: J A Kemp LLP

(56) References cited:
- CN-A- 108 648 486
- US-A1- 2018 286 228

## Description

### TECHNICAL FIELD

The present application relates to the field of intelligent transportation and cloud computing in the artificial intelligence technology, in particular to an annunciator control method, an electronic device and a system.

### BACKGROUND

With the development of intelligent transportation technology, in order to avoid traffic congestion and improve traffic efficiency of vehicles and/or pedestrians, signal control information of an annunciator may be adjusted in combination with a physically positional relationship of a respective signal light, etc. The annunciator refers to a controller for the signal light at an intersection, and annunciators produced by different manufacturers generally have different signal control representation strategies and light state representation strategies.

In the prior art, a city may be divided into a plurality of region, and annunciators of the same manufacturer (that is, annunciators with the same signal control representation strategy) may be deployed per region, and signal control information (such as light state information, etc.) of an individual annunciator is adjusted by receiving the signal control information sent by the respective annunciator within the region and in combination with a physically positional relationship of the respective annunciator in the region.

However, the above method in the prior art has relatively strict requirements on annunciator deployment and lacks flexibility. On the other hand, annunciators of the same manufacturer may have different light state representation strategies, and annunciators with different light state representation strategies cannot work collaboratively, leading to technical problems such as traffic congestion and low traffic efficiency

US 2018/286228 A1 discloses a method for controlling traffic lights of a road geometry network using a cloud-based traffic control system. The method can comprise the following steps: receiving map data including road network geometry and traffic light locations of intersections relative to the road network geometry; receiving signal phase and timing of a traffic light at a traffic light location, receiving probe and sensor data from a plurality of probes traversing a road network geometry, analyzing the probe and sensor data received from the plurality of probes relative to the road network geometry and the traffic light location, determining a modified signal phase and timing of at least one traffic light within the road network geometry based on the analyzed probe and sensor data relative to the road network geometry and the traffic light location, and providing the modified signal phase and timing to the at least one traffic light within the road network geometry.

CN 108648486 A discloses a roadside traffic signal protocol conversion system and method for intelligent networked vehicles.

### SUMMARY

The present invention is defined in the independent claims. The present application provides an annunciator control method, an electronic device and a system for improving flexibility of annunciator deployment.

According to the first aspect of the present application, an annunciator control method is provided, according to independent claim 1.

According to the second aspect of the present application, an annunciator control method is provided, according to independent claim 12.

According to the third aspect of the present application, an electronic device is provided, according to independent claim 14.

According to the present application, a non-transient computer readable storage medium storing computer instructions is provided, where the computer instructions are used to enable the computer to execute the method of the first aspect or the method of the second aspect.

It should be understood that the content described in this section is not intended to identify the key or important features of the embodiments of the present application, nor is it used to limit the scope of the present application. Other features of the present application would become readily comprehensible from the following description.

### BRIEF DESCRIPTION OF DRAWINGS

The drawings are used to better understand the present solution, but do not constitute a limitation on the present application. Among them:
FIG. 1 is a schematic diagram of a first embodiment according to the present application;
FIG. 2 is a schematic diagram of a second embodiment according to the present application;
FIG. 3 is a schematic diagram of a third embodiment according to the present application;
FIG. 4 is a schematic diagram of a fourth embodiment according to the present application;
FIG. 5 is a schematic diagram of a fifth embodiment according to the present application;
FIG. 6 is a schematic diagram of a sixth embodiment according to the present application;
FIG. 7 is a schematic diagram of a seventh embodiment according to the present application;
FIG. 8 is a schematic diagram of an eighth embodiment according to the present application;
FIG. 9 is a schematic diagram of a ninth embodiment according to the present application;
FIG. 10 is a schematic diagram of a tenth embodiment according to the present application;
FIG. 11 is a block diagram of an electronic device for implementing an annunciator control method according to an embodiment of the present application; and
FIG. 12 is a schematic diagram of an eleventh embodiment according to the present disclosure.

### DESCRIPTION OF EMBODIMENTS

The exemplary embodiments of the present application are described below with reference to the drawings, and various details of the embodiments of the present application are included therein to facilitate understanding, and should be regarded as merely exemplary. Therefore, those of ordinary skill in the art should realize that various changes and modifications can be made to the embodiments described herein without departing from the scope of the present application. Likewise, for clarity and conciseness, descriptions of well-known functions and structures are omitted in the following description.

An annunciator refers to a controller for a signal light at an intersection. Generally speaking, annunciators of different manufacturers have different signal control representation strategies, and annunciators of the same manufacturer have different light state representation strategies for the annunciators.

The signal control representation strategy may be understood as a representation method of a strategy for controlling a signal light. For example, according to industry standards for signal light manufacturing, signal lights may be divided into ring diagram type annunciators and stage type annunciators, where the ring diagram type annunciators have a signal control representation strategy different from that of the stage type annunciators.

The light state representation strategy may be understood as a representation method of a strategy for representing light states of the signal lights, where the light states of the signal lights may be color information of the signal lights, such as green light ON and green light duration. Some annunciators have such a light state representation strategy: R represents red lights; and some annunciators have such a light state representation strategy: 1 represents red lights.

A plurality of sections are included in a city, and an individual section may be provided with a plurality of annunciators; based on the above analysis, it can be seen that different annunciators may have different signal control representation strategies, or may have different light state representation strategies.

However, with the development of intelligent transportation technology, how to avoid traffic congestion and improve traffic efficiency of vehicles and/or pedestrians has become an urgent problem to be solved.

In related technologies, considering that different annunciators may have different signal control representation strategies or different light state representation strategies, in order to achieve unified control and management to avoid traffic congestion, a commonly-used method lies in: dividing a city into a plurality of region, deploying annunciators of the same manufacturer (that is, annunciators with the same signal control representation strategy) per region, and adjusting signal control information (such as light state information, etc.) of an individual annunciator by receiving the signal control information sent by the respective annunciator within the region and in combination with physically positional relationship of the respective annunciator in the region.

However, the above-mentioned method in the prior art has relatively strict requirements on annunciator deployment and lacks flexibility. On the other hand, annunciators of the same manufacturer may have different light state representation strategies, and annunciators with different state representation strategies cannot work collaboratively, leading to technical problems such as traffic congestion and low traffic efficiency.

In order to solve at least one of the above-mentioned technical problems, the inventors of the present application obtains the inventive concept of the present application through creative work: on the basis of a preset reference representation strategy, the acquired original attribute information of an individual annunciator is parsed to obtain parsed attribute information, so that respective annunciators have the same representation strategy (that is, the signal control representation strategy and/or the light state representation strategy), and adjustment information is generated based on the parsed attribute information.

The present application provides an annunciator control method, an electronic device and a system, which are applied to the field of intelligent transportation and cloud computing in artificial intelligence technology to achieve the flexibility and diversity of the annunciator deployment and improve traffic efficiency.

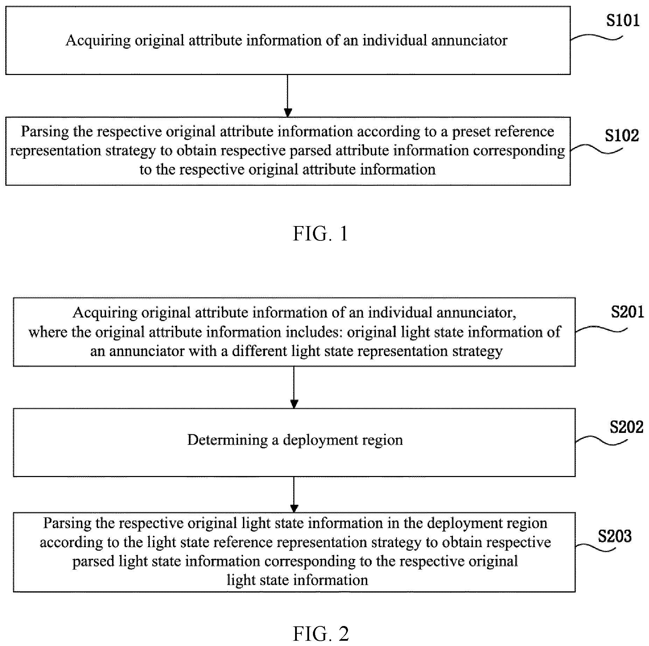

FIG. 1 is a schematic diagram of a first embodiment according to the present application, as shown in FIG. 1, an annunciator control method provided in this embodiment may be applied to a first electronic device, and the method includes:
S 101: acquiring original attribute information of an individual annunciator.

The respective original attribute information includes: original attribute information of an annunciator with a different light state representation strategy and/or original attribute information of an annunciator with a different signal control representation strategy.

Exemplarily, an execution subject of this embodiment may be the first electronic device. The first electronic device may specifically be a server (for example, a cloud server or a local server), or a terminal device, or a processor, or a chip etc., which is not limited in this embodiment.

It should be understood that "original" in the original attribute information is used to distinguish from the parsed attribute information hereinafter, and cannot be understood as a limitation to the original attribute information.

The original attribute information may be understood as an annunciator's light state attribute related information represented by the light state representation strategy; the original attribute information may also be understood as an annunciator's control attribute related information represented by the signal control representation strategy; and the original attribute information may also be understood as including the aforementioned two kinds of attribute related information.

It is worth noting that the annunciator control method of this embodiment may render control on a plurality of annunciators, and the plurality of annunciators may be annunciators with different signal control representation strategies, or may be annunciators with different light state representation strategies, or may be annunciators with both different signal control representation strategies and different light state representation strategies.

That is, on the one hand, according to the annunciator control method provided in this embodiment, there is no need to adopt respective control methods for annunciators with different signal control representation strategies and/or annunciators with different light state representation strategies, so that a unified control is achieved between the annunciators with different signal control representation strategies and/or the annunciators with different light state representation strategies, and a convenient and universal control is achieved over the annunciators with different signal control representation strategies and/or the annunciators with different light state representation strategies, thereby reducing the research and development resources and improving resource utilization; on the other hand, the annunciator control method of this embodiment does not have harsh and mandatory requirements on annunciator deployment, and has flexibility and versatility in application.

S102: parsing the respective original attribute information according to a preset reference representation strategy to obtain respective parsed attribute information corresponding to the respective original attribute information.

The individual piece of parsed attribute information is attribute information represented by the preset reference representation strategy, the respective parsed attribute information is used to generate adjustment information, and the adjustment information is used to adjust signal control information of at least one annunciator.

The signal control information may be understood as information related to the time and state of a signal light, for example, a period of the signal light, a green time ratio of the signal light, a phase difference (that is, a relative time difference between cycle beginnings of intersections) of the signal light and phase conversion information, etc.

In an example, if the original attribute information includes original attribute information of annunciators with different signal control representation strategies, the preset reference representation strategy may be understood as a strategy which is a conversion standard of the signal control representation strategy, that is, different signal control representation strategies all may be represented by the preset reference representation strategy, thereby realizing a unified representation between different signal control representation strategies.

For example, for original attribute information a represented by a signal control representation strategy A, the first electronic device may convert the original attribute information a to parsed attribute information of a preset reference representation strategy C; and for original attribute information b represented by a signal control representation strategy B, the first electronic device may convert the original attribute information b into the parsed attribute information of the preset reference representation strategy C.

In another example, if the original attribute information includes original attribute information of annunciators with different light state representation strategies, the preset reference representation strategy may be understood as a strategy which is a conversion standard of the light state representation strategy, that is, different light state representation strategies all may be represented by the preset reference representation strategy, thereby realizing a unified representation between different light state representation strategies.

For example, for original attribute information d represented by a light state representation strategy D, the first electronic device may convert the original attribute information d to parsed attribute information of a preset reference representation strategy F; and for original attribute information e represented by a light state representation strategy E, the first electronic device may convert the original attribute information e into the parsed attribute information of the preset reference representation strategy F.

In yet another example, if the original attribute information includes original attribute information of annunciators with different signal control representation strategies and original attribute information of annunciators with different light state representation strategies, the preset reference representation strategy may include a strategy which is a conversion standard of the signal control representation strategy and a strategy which is a conversion standard of the light state representation strategy, reference may be made to the aforementioned two examples for specific conversion principles, and redundant description is omitted here.

Based on the above analysis, an embodiment of the present disclosure provides an annunciator control method, the method is applied to a first electronic device, and the method includes: acquiring original attribute information of an individual annunciator, where the respective original attribute information includes original attribute information of an annunciator with a different light state representation strategy and/or original attribute information of an annunciator with a different signal control representation strategy; and parsing the respective original attribute information according to a preset reference representation strategy to obtain respective parsed attribute information corresponding to the respective original attribute information, where an individual piece of parsed attribute information is attribute information represented by the preset reference representation strategy, the respective parsed attribute information is used to generate adjustment information, and the adjustment information is used to adjust signal control information of at least one annunciator. In this embodiment, the feature of parsing the respective original attribute information based on the preset reference representation strategy to obtain the attribute information represented by the preset reference representation strategy (that is, the parsed attribute information) is introduced, which may realize a unified representation of original attribute information of annunciators with different light state representation strategies and/or a unified representation of original attribute information of annunciators with different signal control representation strategies, thereby avoiding disadvantages that the annunciator control method has strict requirements on annunciator deployment in the related art, and realizing the application flexibility of the annunciator control method, moreover, a technical effect that signal control information adjustment may be improved in flexibility, accuracy and reliability by means of generating adjustment information based on the respective parsed attribute information to adjust signal control information of one or more annunciators based on the adjustment information,.

FIG. 2 is a schematic diagram of a second embodiment according to the present application, as shown in FIG. 2, an annunciator control method provided in this embodiment may be applied to a first electronic device, and the method includes:
S201: acquiring original attribute information of an individual annunciator.

The respective original attribute information includes: original light state information of an annunciator with a different light state representation strategy.

Exemplarily, for descriptions on the annunciator, the original attribute information and the light state representation strategy, reference may be made to the first embodiment, and the redundant description is omitted herein.

Similarly, "original" in the original light state information is used to distinguish from the parsed light state information hereinafter, and cannot be understood as a limitation to the original light state information. In combination with the above embodiments, the original light state information may be understood as light state attribute related information.

S202: determining a deployment region.

The respective annunciator is included in the deployment region, that is, the deployment region is a region for deploying the respective annunciator.

S203: parsing the respective original light state information in the deployment region according to the light state reference representation strategy to obtain respective parsed light state information corresponding to the respective original light state information.

The individual piece of parsed light state information is attribute information represented by the light state reference representation strategy, the respective parsed attribute information is used to generate adjustment information, and the adjustment information is used to adjust signal control information of at least one annunciator.

In this embodiment, the original attribute information includes original light state information and, correspondingly, the preset reference representation strategy includes the light state reference representation strategy.

In particular, the first electronic device parses the original light state information represented based on the light state representation strategy according to the light state reference representation strategy to obtain the parsed light state information represented by the light state reference representation strategy.

It is worth to be noted that, in this embodiment, by parsing the respective original light state information in the deployment region based on the light state reference representation strategy to obtain the respective parsed light state information, the signal light control method in this embodiment may be applied to a region including signal lights with different light state representation strategies, which improves the application flexibility of the signal light control method, moreover, by generating the adjustment information based on the respective parsed light state information, the adjustment information may be highly correlated with the annunciators, so that the technical effect of improving the reliability and the efficiency of the adjustment information may be achieved, and the technical effect of improving the control accuracy and reliability when adjusting the signal control information based on the adjustment information may be achieved.

In some embodiments, S203 may include the following steps.

The first step: acquiring annunciator road network information corresponding to the deployment region.

The annunciator road network information is used to characterize deployment location information of the annunciator in the deployment region.

The second step: parsing the respective original light state information according to the light state reference representation strategy and the annunciator road network information to obtain the respective parsed light state information corresponding to the respective original light state information.

This embodiment may be understood as: the deployment region has annunciator road network information, and the annunciator road network information includes deployment location information of the annunciator in the deployment region, that is, the deployment location information of the respective annunciator in the deployment region may be determined by the annunciator road network information. Correspondingly, the first electronic device may convert the light state representation strategy of the individual piece of original light state information to the parsed light state information represented by the light state reference representation strategy, in combination with the light state reference representation strategy and the deployment location information of the respective annunciator.

It is worth to be noted that, in this embodiment, by determining the respective parsed light state information in combination with the light state reference representation strategy and the annunciator road network information, the parsed light state information may be highly compatible with the deployment location information, and the accuracy and reliability of the parsed light state information may be improved.

In some embodiments, the annunciator road network information includes a binding relationship between an intersection and an annunciator; and the second step may include the following substeps:
The first substep: for an arbitrary annunciator, determining an intersection corresponding to the arbitrary annunciator, according to the binding relationship.

The second substep: parsing the original light state information of the arbitrary annunciator according to the light state reference representation strategy to obtain parsed light state information of the intersection corresponding to the arbitrary annunciator.

It is worth to be noted that, in this embodiment, the parsed light state information is determined based on the binding relationship, and the binding relationship characterizes a corresponding relationship between an intersection and an annunciator. Therefore, the technical feature of improving the accuracy and the reliability of the parsed light state information may be further achieved.

In some embodiments, the second substep may include: acquiring state information of the arbitrary annunciator, where the state information of the arbitrary annunciator is used to characterize the arbitrary annunciator being in an online state or an offline state; converting the original light state information of the arbitrary annunciator to light state information of the intersection corresponding to the arbitrary annunciator, according to the light state reference representation strategy; splicing the state information of the arbitrary annunciator and the light state information of the intersection corresponding to the arbitrary annunciator to obtain the parsed light state information of the intersection corresponding to the arbitrary annunciator.

In this embodiment, the parsed light state information may include two dimensions of content, one dimension of content is the state information, for example, the annunciator is in the online state, or the annunciator is in the offline state; and the other dimension of content is to: convert the original light state information to the light state information of the corresponding intersection based on the light state reference representation strategy, and splice the two dimensions of content to obtain the parsed light state information.

In some embodiments, the parsed light state information may include: intersection identification, meta-information (for example, an original timestamp of a signal light), state information (for example, the online state or the offline state), a control mode (for example, different light state solutions of a signal light in different time periods, which may specifically include solution identification, solution cycle, solution countdown, etc.), a phase state (that is, information on different directions at an intersection, such as phase identification, light color, light color countdown, etc.).

It is worth to be noted that, in this embodiment, by generating the parsed light state information in combination with the two dimensions of content, completeness, comprehensiveness and diversity of the parsed light state information may be improved, so that the technical effect of improving the accuracy and the reliability of the adjustment information generated based on the respective parsed light state information may be achieved.

In some embodiments, the determining the binding relationship may include the following steps:
The first step: determining an individual intersection in the deployment region.

Exemplarily, the first electronic device may determine the respective intersection provided in the deployment region.

The second step: determining an annunciator provided at the individual intersection.

It is to be noted that one or more annunciators may be provided at one intersection, and in this step, for an arbitrary intersection, the first electronic device may determine one or more annunciators provided at the arbitrary intersection.

The third step: constructing a binding relationship between the individual intersection and the annunciator(s) provided at the intersection.

Exemplarily, if one annunciator is provided at one intersection, the binding relationship may characterize a corresponding relationship between the intersection and the one annunciator; if more annunciators are provided at one intersection, the binding relationship may characterize a corresponding relationship between the intersection and the annunciators.

It is worth to be noted that, in this embodiment, by determining the annunciator(s) at the individual intersection and constructing the binding relationship between the individual intersection and the annunciator(s) provided at the intersection, the binding relationship may have a more comprehensive coverage, and thus the technical effect of having relatively high accuracy and reliability is achieved.

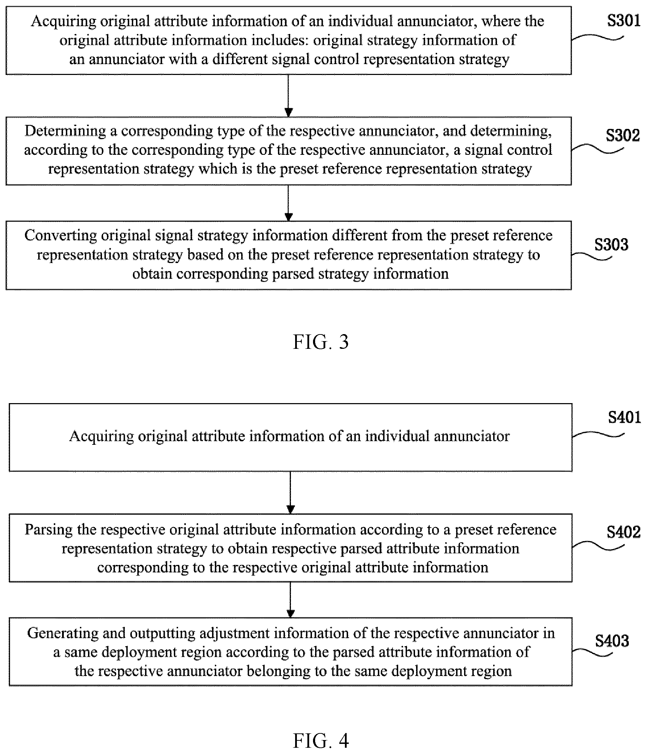

FIG. 3 is a schematic diagram of a third embodiment according to the present application, as shown in FIG. 3, an annunciator control method provided in this embodiment may be applied to a first electronic device, and the method includes:
S301: acquiring original attribute information of an individual annunciator.

The respective original attribute information includes: original strategy information of an annunciator with a different signal control representation strategy.

Exemplarily, for descriptions on the annunciator, the original attribute information and the signal control representation strategy, reference may be made to the first embodiment, and the redundant description is omitted herein.

Similarly, "original" in the original strategy information is used to distinguish from parsed strategy information hereinafter, and cannot be understood as a limitation to the original strategy information. In combination with the above embodiments, the original strategy information may be understood as information related to a control strategy attribute.

S302: determining a corresponding type of the respective annunciator, and determining, according to the corresponding type of the respective annunciator, a signal control representation strategy which is the preset reference representation strategy.

The type of the annunciator is obtained through dividing according to industry standards. For example, the annunciator may be of a ring diagram type or a stage type.

In some embodiments, if the corresponding type of the annunciator includes a ring diagram type and a stage type, the preset reference representation strategy is a signal control representation strategy corresponding to the ring diagram type.

This step may be understood as: for an individual annunciator, determining a type of the annunciator, thereby obtaining a corresponding type of the respective annunciator, and the individual type has a signal control representation strategy, correspondingly, a signal control presentation strategy which is the preset reference presentation strategy may be selected from respective signal control presentation strategies.

S303: converting original signal strategy information different from the preset reference representation strategy based on the preset reference representation strategy to obtain corresponding parsed strategy information.

The individual piece of parsed strategy information is attribute information represented by the preset reference representation strategy, the respective parsed strategy information is used to generate adjustment information, and the adjustment information is used to adjust signal control information of at least one annunciator.

It is worth to be noted that, in this embodiment, by determining, according to a corresponding type of the respective annunciator, a signal control representation strategy which is the preset reference representation strategy so as to convert original signal strategy information different from the preset reference representation strategy to obtain corresponding parsed strategy information, only the original signal strategy information different from the preset reference representation strategy may be converted, thereby achieving technical effects of saving conversion resources, improving the conversion efficiency and improving efficiency of the obtained parsed strategy information.

It should be understood that, when the respective original attribute information includes not only original attribute information of an annunciator with a different light state representation strategy but also original attribute information of an annunciator with a different signal control representation strategy, reference may be made to implementation principles of the second embodiment and the third embodiment for the annunciator control method, and the redundant description is omitted herein.

FIG. 4 is a schematic diagram of a fourth embodiment according to the present application, as shown in FIG. 4, an annunciator control method provided in this embodiment may be applied to a first electronic device, and the method includes:
S401: acquiring original attribute information of an individual annunciator.

The respective original attribute information includes: original attribute information of an annunciator with a different light state representation strategy and/or original attribute information of an annunciator with a different signal control representation strategy.

S402: parsing the respective original attribute information according to a preset reference representation strategy to obtain respective parsed attribute information corresponding to the respective original attribute information.

The individual piece of parsed attribute information is attribute information represented by the preset reference representation strategy.

Exemplarily, for descriptions on S401 and S402, reference may be made to any one of the first embodiment to the third embodiment, and the redundant description is omitted herein.

S403: generating and outputting adjustment information of the respective annunciator in a same deployment region according to the parsed attribute information of the respective annunciator belonging to the same deployment region.

The adjustment information is used to adjust signal control information of at least one annunciator.

It is worth to be noted that, in this embodiment, adjustment information of a same deployment region may be generated by the first electronic device based on the respective parsed attribute information. In combination with the above analysis, original attribute information of a different light state representation strategy and/or original attribute information of a different signal control representation strategy are processed in a unified manner by adopting the preset reference representation strategy, the technical effect of improving the comprehensiveness and the reliability of adjustment information generation may be achieved, and the technical effect of improving the efficiency of adjustment information generation may be achieved.

In some embodiments, S403 may include: generating and outputting the adjustment information according to the respective parsed attribute information and annunciator road network information of the same deployment region.

It is worth to be noted that, in this embodiment, by generating the adjustment information in combination with annunciator road network information, the adjustment information may be combined with the actual deployment region, so that the technical effect of making the adjustment information have relatively high practical applicability and reliability may be achieved.

In some embodiments, the annunciator road network information includes intersection information in the same deployment region; S403 may include: generating and outputting the adjustment information according to the intersection information and the respective parsed attribute information.

It is worth to be noted that, in this embodiment, by generating the adjustment information in combination with the intersection information, the adjustment information may be combined with an actual intersection, so that the technical effect of further making the adjustment information have relatively high practical applicability and reliability may be achieved.

In an example, the generating and the outputting the adjustment information according to the intersection information and the respective parsed attribute information may include: determining location information between respective intersections according to the intersection information, and generating and outputting the adjustment information according to the respective location information and the respective parsed attribute information.

In another example, the generating and the outputting the adjustment information according to the intersection information and the respective parsed attribute information may include: acquiring traffic information of an individual intersection according to the intersection information, and generating and outputting the adjustment information according to the respective traffic information and the respective parsed attribute information.

In yet another example, the generating and the outputting the adjustment information according to the intersection information and the respective parsed attribute information may include: acquiring traffic information of an individual intersection according to the intersection information, determining location information between respective intersections according to the annunciator road network information, and generating and outputting the adjustment information according to the respective traffic information, the respective location information and the respective parsed attribute information.

That is, in this embodiment, the adjustment information may be generated based on the respective location information and the parsed attribute information; the adjustment information may also be generated based on the traffic information and the parsed attribute information the adjustment information may also be generated based on the traffic information, the location information and the parsed attribute information.

It is worth to be noted that, in this embodiment, the adjustment information is generated by using a variety of embodiments, the flexibility and the diversity of adjustment information generation may be improved, especially when the adjustment information is generated in combination with the traffic information, the location information and the parsed attribute information, the adjustment information may be highly suitable to reality, so that the technical effect of improving the accuracy and the reliability of the adjustment information may be achieved.

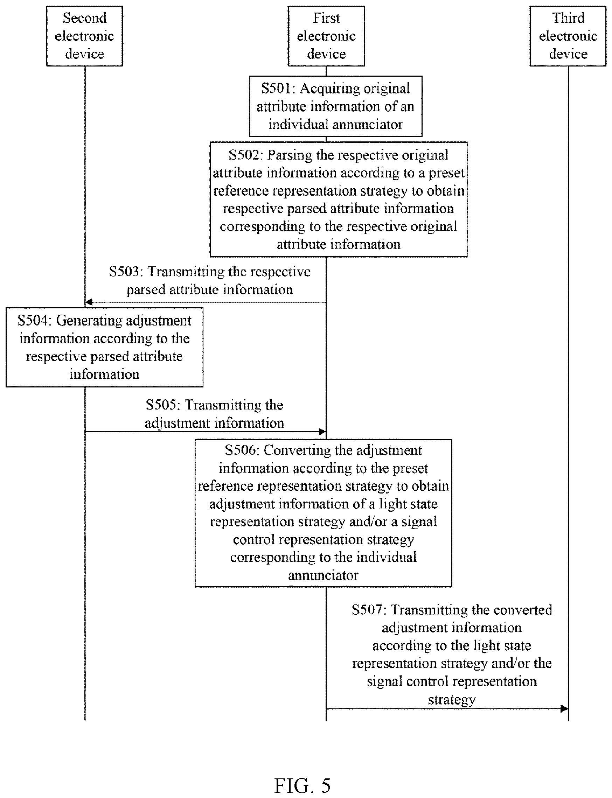

FIG. 5 is a schematic diagram of a fifth embodiment according to the present application, and an annunciator control method provided in this embodiment includes:
S501: a first electronic device acquires original attribute information of an individual annunciator.

The respective original attribute information includes: original attribute information of an annunciator with a different light state representation strategy and/or original attribute information of an annunciator with a different signal control representation strategy.

S502: the first electronic device parses the respective original attribute information according to a preset reference representation strategy to obtain respective parsed attribute information corresponding to the respective original attribute information.

The individual piece of parsed attribute information is attribute information represented by the preset reference representation strategy.

Exemplarily, for descriptions on S501 and S502, reference may be made to any one of the first embodiment to the third embodiment, and the redundant description is omitted herein.

S503: the first electronic device transmits the respective parsed attribute information to a second electronic device.

Correspondingly, the second electronic device receives the respective parsed attribute information transmitted by the first electronic device.

The first electronic device may be an annunciator access platform accessible by the respective annunciator, and the second electronic device may be a traffic management platform, so that adjustment information is generated according to the respective parsed attribute information and traffic information.

S504: the second electronic device generates adjustment information according to the respective parsed attribute information.

S505: the second electronic device transmits the adjustment information to the first electronic device.

Correspondingly, the first electronic device receives the adjustment information transmitted by the second electronic device.

The adjustment information is used to adjust signal control information of at least one annunciator.

In some embodiments, for the principle according to which the adjustment information is generated by the second electronic device according to the respective parsed attribute information, reference may be made to the principle according to which the adjustment information is generated by the first electronic device according to the respective parsed attribute information, and the redundant description is omitted herein.

In this embodiment, the adjustment information may be generated by the second electronic device. Therefore, in combination with the above embodiment, the adjustment information may be generated by the first electronic device, and the adjustment information may also be generated by the second electronic device, so that the technical effect with regard to the flexibility and the diversity of adjustment information generation may be achieved.

S506: the first electronic device converts the adjustment information according to the preset reference representation strategy to obtain adjustment information of a light state representation strategy and/or a signal control representation strategy corresponding to the individual annunciator.

S507: the first electronic device transmits the converted adjustment information to a third electronic device according to the light state representation strategy and/or the signal control representation strategy.

The converted adjustment information is used to adjust signal control information of at least one annunciator. The third electronic device is an electronic device controlling an annunciator with the same light state representation strategy and/or the same signal control representation strategy.

In combination with the above analysis, the first electronic device performs unified (or standardized) processing on the respective original attribute information, that is, the adjustment information is information after the unified processing, therefore, in this embodiment, after the adjustment information is determined, the adjustment information may be converted to adjustment information represented based on a light state representation strategy, and/or the adjustment information may be converted to adjustment information represented based on a signal control representation strategy, so that the third electronic device adjusts the signal control information based on the converted adjustment information, thereby achieving the technical effect of improving the accuracy and the reliability of the adjustment.

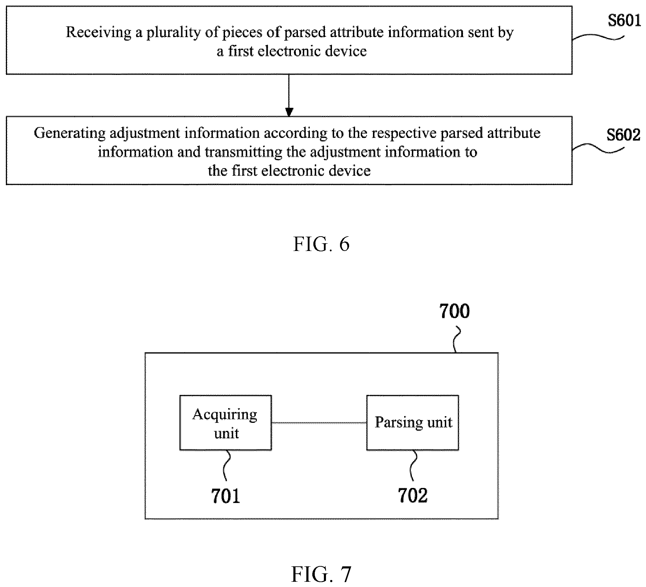

FIG. 6 is a schematic diagram of a sixth embodiment according to the present application, an annunciator control method provided in this embodiment may be applied to a second electronic device, and the method includes:
S601: receiving a plurality of pieces of parsed attribute information sent by a first electronic device.

Among them, a respective piece of the pieces of parsed attribute information is obtained by parsing an individual piece of original attribute information according to a preset reference representation strategy, the individual piece of parsed attribute information is attribute information represented by a preset reference representation strategy, and the respective original attribute information includes: original attribute information of an annunciator with a different light state representation strategy and/or original attribute information of an annunciator with a different signal control representation strategy.

Exemplarily, the execution subject of this embodiment may be the second electronic device. The second electronic device may specifically be a server (such as a cloud server, or a local server), or a terminal device, or a processor, or a chip, etc., which is not limited in this embodiment.

For descriptions on the first electronic device and the parsed attribute information etc., reference may be made to the above embodiments, and the redundant description is omitted herein.

S602: generating adjustment information according to the respective parsed attribute information and transmitting the adjustment information to the first electronic device, where the adjustment information is used to adjust signal control information of at least one annunciator.

In some embodiments, S602 may include: generating and outputting adjustment information of the respective annunciator in a same deployment region according to the parsed attribute information of the respective annunciator belonging to the same deployment region.

In some embodiments, the generating and the outputting the adjustment information of the respective annunciator in the same deployment region according to the parsed attribute information of the respective annunciator belonging to the same deployment region include: generating and outputting the adjustment information according to the respective parsed attribute information and annunciator road network information of the same deployment region.

In some embodiments, the generating and the outputting the adjustment information according to intersection information and the respective parsed attribute information include:
determining location information between respective intersections according to the intersection information, and generating and outputting the adjustment information according to the respective location information and the respective parsed attribute information; or,
acquiring traffic information of an individual intersection according to the intersection information, and generating and outputting the adjustment information according to the respective traffic information and the respective parsed attribute information; or,
acquiring traffic information of an individual intersection according to the intersection information, determining location information between respective intersections according to the annunciator road network information, generating the adjustment information according to the respective traffic information, the respective location information and the respective parsed attribute information, and transmitting the adjustment information to the first electronic device.

FIG. 7 is a schematic diagram of a seventh embodiment according to the present application, as shown in FIG. 7, an electronic device 700 of this embodiment includes:
an acquiring unit 701 configured to acquire original attribute information of an individual annunciator, where the respective original attribute information includes: original attribute information of an annunciator with a different light state representation strategy and/or original attribute information of an annunciator with a different signal control representation strategy; and
a parsing unit 702 configured to parse the respective original attribute information according to a preset reference representation strategy to obtain respective parsed attribute information corresponding to the respective original attribute information, where the individual piece of parsed attribute information is attribute information represented by the preset reference representation strategy, the respective parsed attribute information is used to generate adjustment information, and the adjustment information is used to adjust signal control information of at least one annunciator.

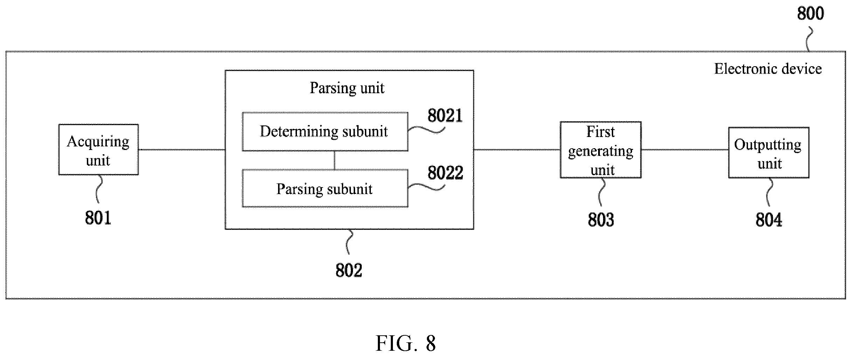

FIG. 8 is a schematic diagram of an eighth embodiment according to the present application, and as shown in FIG. 8, an electronic device 800 of this embodiment includes:
an acquiring unit 801 configured to acquire original attribute information of an individual annunciator, where the respective original attribute information includes: original attribute information of an annunciator with a different light state representation strategy and/or original attribute information of an annunciator with a different signal control representation strategy; and
a parsing unit 802 configured to parse the respective original attribute information according to a preset reference representation strategy to obtain respective parsed attribute information corresponding to the respective original attribute information, where the individual piece of parsed attribute information is attribute information represented by the preset reference representation strategy, the respective parsed attribute information is used to generate adjustment information, and the adjustment information is used to adjust signal control information of at least one annunciator.

It can be known in combination with FIG. 8 that, in some embodiments, if the respective original attribute information includes original light state information, the parsed attribute information includes parsed light state information, and the preset reference representation strategy includes a light state reference representation strategy; the parsing unit 802 includes:
a determining subunit 8021 configured to determine a deployment region, where the respective annunciator is included in the deployment region; and
a parsing subunit 8022 configured to parse the respective original light state information in the deployment region according to the light state reference representation strategy to obtain the respective parsed light state information corresponding to the respective original light state information.

In some embodiments, the parsing subunit 8022 includes:
an acquiring module configured to acquire annunciator road network information corresponding to the deployment region, where the annunciator road network information is used to characterize deployment location information of the annunciator in the deployment region; and
a parsing module configured to parse the respective original light state information according to the light state reference representation strategy and the annunciator road network information to obtain the respective parsed light state information corresponding to the respective original light state information.

In some embodiments, the annunciator road network information includes: a binding relationship between an intersection and an annunciator; the parsing module includes:
a first determining submodule configured to, for an arbitrary annunciator, determine an intersection corresponding to the arbitrary annunciator according to the binding relationship; and
a parsing submodule configured to parse the original light state information of the arbitrary annunciator according to the light state reference representation strategy to obtain parsed light state information of intersection corresponding to the arbitrary annunciator.

In some embodiments, the parsing module further includes:
a second determining submodule configured to determine an individual intersection in the deployment region, and determine an annunciator provided at the individual intersection; and
a constructing submodule configured to construct a binding relationship between the individual intersection and the annunciator provided at the intersection.

In some embodiments, the parsing submodule is configured to: acquire state information of the arbitrary annunciator, where the state information of the arbitrary annunciator is used to characterize the arbitrary annunciator being in an online state or in an offline state; and convert the original light state information of the arbitrary annunciator to light state information of the intersection corresponding to the arbitrary annunciator according to the light state reference representation strategy; and splice the state information of the arbitrary annunciator and the light state information of the intersection corresponding to the arbitrary annunciator to obtain the parsed light state information of the intersection corresponding to the arbitrary annunciator.

In some embodiments, if the respective original attribute information includes original strategy information, the parsed attribute information includes parsed strategy information; the determining subunit 8021 is configured to determine a corresponding type of the respective annunciator, and determine, according to the corresponding type of the respective annunciator, a signal control representation strategy which is the preset reference representation strategy.

The parsing subunit 8022 is configured to convert the original signal strategy information different from the preset reference representation strategy based on the preset reference representation strategy to obtain corresponding parsed strategy information.

In some embodiments, if the corresponding type of the respective annunciator includes a ring diagram type and a stage type, the preset reference representation strategy is a signal control representation strategy corresponding to the ring diagram type.

The electronic device 800 further includes a first generating unit 803 and an outputting unit 804. The first generating unit 803 is configured to generate adjustment information of the respective annunciator in a same deployment region according to the parsed attribute information of the respective annunciator belonging to the same deployment region.

The outputting unit 804 is configured to output the adjustment information.

In some embodiments, the first generating unit 803 is configured to generate the adjustment information according to the respective parsed attribute information and annunciator road network information of the same deployment region.

In some embodiments, the annunciator road network information includes intersection information in the same deployment region; the first generating unit 803 is configured to generate the adjustment information according to the intersection information and the respective parsed attribute information.

In some embodiments, the first generating unit 803 is configured to determine location information between respective intersections according to the intersection information, and generate the adjustment information according to the respective location information and the respective parsed attribute information; or,
the first generating unit 803 is configured to acquire traffic information of an individual intersection according to the intersection information, and generate the adjustment information according to the respective traffic information and the respective parsed attribute information; or,
the first generating unit 803 is configured to acquire traffic information of an individual intersection according to the intersection information, determine location information between respective intersections according to the annunciator road network information, and generate the adjustment information according to the respective traffic information, the respective location information and the respective parsed attribute information.

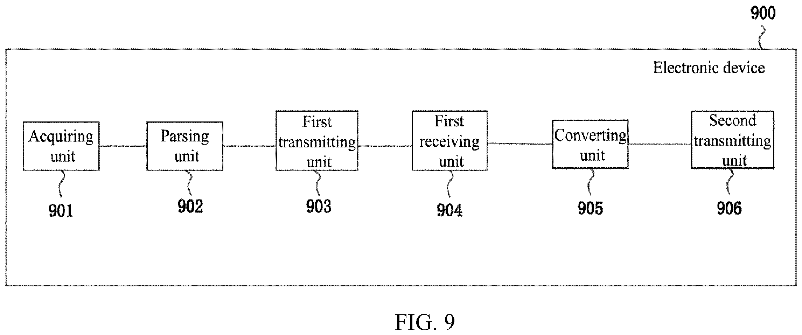

FIG. 9 is a schematic diagram of a ninth embodiment according to the present application, and as shown in FIG. 9, an electronic device 900 of this embodiment includes:
an acquiring unit 901 configured to acquire original attribute information of an individual annunciator, where the respective original attribute information includes original attribute information of an annunciator with a different light state representation strategy and/or original attribute information of an annunciator with a different signal control representation strategy;
a parsing unit 902 configured to parse the respective original attribute information according to a preset reference representation strategy to obtain respective parsed attribute information corresponding to the respective original attribute information, where the individual piece of parsed attribute information is attribute information represented by the preset reference representation strategy, the respective parsed attribute information is used to generate adjustment information, and the adjustment information is used to adjust signal control information of at least one annunciator;
a first transmitting unit 903 configured to transmit the respective parsed attribute information to a second electronic device;
a first receiving unit 904 configured to receive the adjustment information generated and transmitted by the second electronic device according to the respective parsed attribute information;
a converting unit 905 configured to convert the adjustment information according to the preset reference representation strategy to obtain adjustment information of a light state representation strategy and/or a signal control representation strategy corresponding to the individual annunciator; and
a second transmitting unit 906 configured to transmit the converted adjustment information to a third electronic device according to the light state representation strategy and/or the signal control representation strategy, where the third electronic device is an electronic device controlling an annunciator with the same light state representation strategy and/or the same signal control representation strategy.

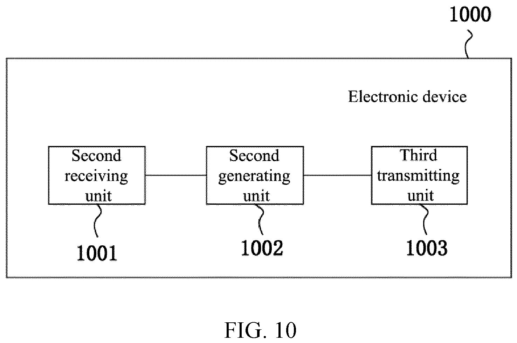

FIG. 10 is a schematic diagram of a tenth embodiment according to the present application, and as shown in FIG. 10, an electronic device 1000 of this embodiment includes:
a second receiving unit 1001 configured to receive a plurality of pieces of parsed attribute information sent by a first electronic device, where a respective piece of the pieces of parsed attribute information is obtained by parsing an individual piece of original attribute information according to a preset reference representation strategy, the individual piece of parsed attribute information is attribute information represented by the preset reference representation strategy, and the respective original attribute information includes: original attribute information of an annunciator with a different light state representation strategy and/or original attribute information of an annunciator with a different signal control representation strategy;
a second generating unit 1002 configured to generate adjustment information according to the respective parsed attribute information; and
a third transmitting unit 1003 configured to transmit the adjustment information to the first electronic device, where the adjustment information is used to adjust signal control information of at least one annunciator.

In some embodiments, the second generating unit 1002 is configured to generate adjustment information of the respective annunciator in a same deployment region according to the parsed attribute information of the respective annunciator belonging to the same deployment region.

In some embodiments, the second generating unit 1002 is configured to generate the adjustment information according to the respective parsed attribute information and annunciator road network information of the same deployment region.

In some embodiments, the annunciator road network information includes intersection information in the same deployment region; the second generating unit 1002 is configured to generate the adjustment information according to the intersection information and the respective parsed attribute information.

In some embodiments, the second generating unit 1002 is configured to determine location information between respective intersections according to the intersection information, and generate the adjustment information according to the respective location information and the respective parsed attribute information; or,
the second generating unit 1002 is configured to acquire traffic information of an individual intersection according to the intersection information, and generate the adjustment information according to the respective traffic information and the respective parsed attribute information; or,
the second generating unit 1002 is configured to acquire traffic information of an individual intersection according to the intersection information, determine location information between respective intersections according to the annunciator road network information, and generate the adjustment information according to the respective traffic information, the respective location information and the respective parsed attribute information.

According to embodiments of the present application, the present application further provides an electronic device and a readable storage medium.

According to an embodiment of the present application, the present application further provides a computer program product. The computer program product includes a computer program which is stored in the readable storage medium, at least one processor of an electronic device may read the computer program from the readable storage medium, and at least one processor performs the computer program, so that the electronic device performs the solution provided in any one of the above embodiments.

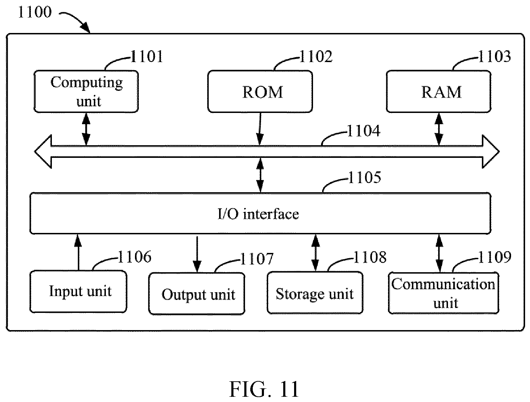

FIG. 11 shows a schematic block diagram of an exemplary electronic device 1100 that may be used to implement the embodiments of the present application. The electronic device is intended to represent various forms of digital computers, such as a laptop computer, a desktop computer, a workbench, a personal digital assistant, a server, a blade server, a large-scale computer, and other suitable computer. The electronic device may also represent various forms of mobile apparatuses, such as a personal digital processor, a cellular phone, a smart phone, a wearable device and other similar computing apparatus. The components shown in this text, their connections and relationships and their functions are only examples, and are not intended to limit implementations of present disclosure described and/or required in this text.

As shown in FIG. 11, the electronic device 1100 includes a computing unit 1101, which may perform various appropriate actions and processing, according to computer programs stored in a read-only memory (ROM) 1102 or computer programs loaded from a storage unit 1108 to a random access memory (RAM) 1103. Various programs and data required for the operation of the device 1100 may also be stored in the RAM 1103. The computing unit 1101, the ROM 1102 and the RAM 1103 are connected to each other through a bus 1104. An input /output (I/O) interface 1105 is also connected to the bus 1104.

A plurality of components in the device 1100 are connected to the I/O interface 1105, including: an input unit 1106 such as a keyboard and a mouse, etc.; an output unit 1107 such as various types of displays and speakers, etc.; a storage unit 1108 such as a magnetic disk, an optical disk etc.; and a communication unit 1109 such as a network card, a modem and a wireless communication transceiver, etc. The communication unit 1109 allows the device 1100 to exchange information/data with other device through the computer network such as Internet and/or various telecommunication networks.

The computing unit 1101 may be a variety of general and/or dedicated processing components with processing and computing capabilities. Some examples of the computing unit 1101 include but are not limited to a central processing unit (CPU), a graphic processing unit (GPU), various dedicated artificial intelligence (AI) computing chips, various computing units that run machine learning model algorithms, digital signal processors (DSP) and any appropriate processors, controllers, micro-controllers, etc. The computing unit 1101 executes various methods and processes described hereinbefore, such as the annunciator control method. For example, in some embodiments, the annunciator control method may be implemented as a computer software program, which is tangibly contained in a machine-readable medium, such as the storage unit 1108. In some embodiments, part of or all of computer programs may be loaded and/or installed into the device 1100 via the ROM 1102 and/or the communication unit 1109. When the computer program is loaded into the RAM 1103 and executed by the computing unit 1101, one or more steps of the annunciator control method described above may be executed. Alternatively, in other embodiments, the computing unit 1101 may be configured to execute the annunciator control method by any other suitable means (e.g., by means of firmware).

The various implementations of the system and the technology described above in this text may be implemented in a digital electronic circuit system, an integrated circuit system, a field programmable gate array (FPGA), an application specific integrated circuit (ASIC), an application specific standard product (ASSP), a system-on-chip (SOC) system, a complex programmable logic device (CPLD), computer hardware, firmware, software, and/or a combination thereof. These various implementations may include: implementations in one or more computer programs, the one or more computer programs may be executed and/or explained on a programmable system including at least one programmable processor, the programmable processor may be a dedicated or general programmable processor, which may receive data and instructions from a storage system, at least one input apparatus and at least one output apparatus and transmit the data and the instructions to the storage system, the at least one input apparatus, and the at least one output apparatus.

The program codes used to implement the method of the present disclosure may be written in any combination of one or more programming languages. These program codes may be provided to processors or controllers of general computers, dedicated computers, or other programmable data processing apparatus so that the program codes which, when executed by the processors or the controllers, enable functions/operations specified in flowcharts and/or block diagrams to be implemented. The program codes may be entirely executed on a machine, partly executed on the machine, partly executed on the machine and partly executed on a remote machine as an independent software package, or entirely executed on the remote machine or a server.

In the context of the present disclosure, the machine-readable medium may be a tangible medium, which may contain or store a program for use by an instruction execution system, apparatus or device or in combination with the instruction execution system, apparatus or device. The machine-readable medium may be a machine-readable signal medium or a machine-readable storage medium. The machine-readable medium may include, but is not limited to, electronic, magnetic, optical, electromagnetic, infrared or semiconductor systems, apparatuses or devices, or any suitable combination of the above content. More specific examples of the machine-readable storage medium may include electrical connections based on one or more lines, a portable computer disk, a hard disk, a random access memory (RAM), a read-only memory (ROM), an erasable programmable read-only memory (EPROM or flash memory), optical fibers, portable compact disk read-only memory (CD-ROM), an optical storage device, a magnetic storage device, or any suitable combination of the above content.

In order to provide interaction with a user, the system and the technology described here may be implemented on a computer which has: a display apparatus (for example, a cathode ray tube (CRT) monitor or a liquid crystal display (LCD) monitor) used to display information to the user; and a keyboard and a pointing apparatus (for example, a mouse or a trackball) through which the user may provide input to the computer. Other types of apparatuses may also be used to provide interaction with the user; for example, the feedback provided to the user may be any form of sensory feedback (for example, visual feedback, auditory feedback, or tactile feedback); and the user's input may be received in any form (including acoustic input, voice input, or tactile input).

The system and technology described here may be implemented in a computing system that includes a back-end component (for example, as a data server), or a computing system that includes a middleware component (for example, an application server), or a computing system that includes a front-end component (for example, a subscriber computer with a graphical user interface or a web browser through which the user may interact with the implementations of the system and the technology described herein), or a computing system including any combination of this kind of back-end components, middleware components or front-end components. The components of the system may be connected to each other through any form or medium of digital data communication (for example, the communication network). Examples of the communication network include: a local area network (LAN), a wide area network (WAN) and the Internet.

The computer system may include a client and a server. The client and the server are generally far away from each other and usually interact through the communication network. The relationship between the client and the server is generated through computer programs running on corresponding computers and having a client-server relationship with each other. The server may be a cloud server which also known as a cloud computing server or a cloud host and is a host product in a cloud computing service system to solve disadvantages of difficult management and weak business scalability in traditional physical hosts and VPS services ("Virtual Private Server", or "VPS" for short). The server may also be a server of a distributed system, or a server combined with a blockchain.

According to another aspect of the embodiment of the present disclosure, the present disclosure further provides an annunciator control system including:
the electronic device as described in any one of the seventh embodiment to the ninth embodiment; and
the electronic device as described in the tenth embodiment.

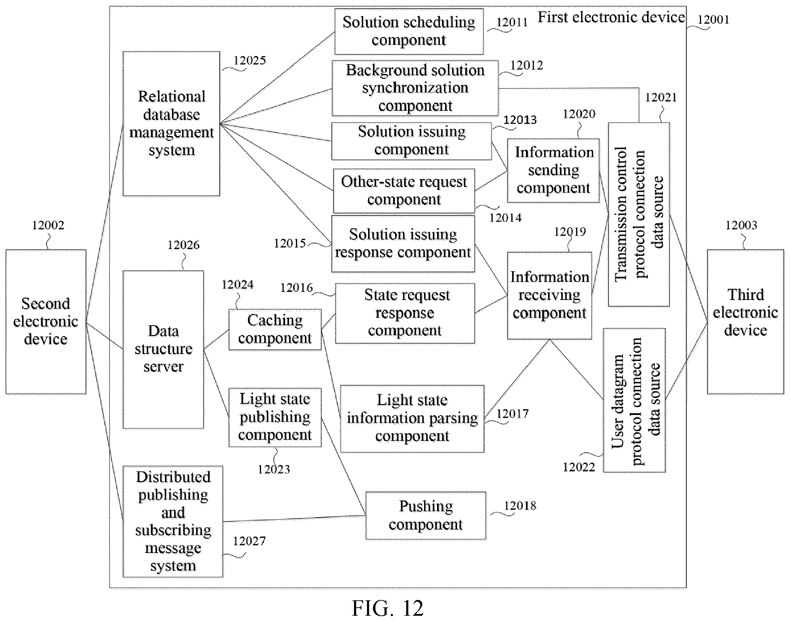

FIG. 12 is a schematic diagram of an eleventh embodiment according to the present application, as shown in FIG. 12, an annunciator control system includes a first electronic device 12001 and a second electronic device 12002. As shown in FIG. 12, a third electronic device 12003 may be a part of the system or an external device of the system, which is not limited in this embodiment.

In some embodiments, the first electronic device 12001 establishes communication with the second electronic device 12002 and the third electronic device 12003 respectively, the first electronic device 12001 may be an annunciator access platform, the second electronic device 12002 may be a traffic control platform, and the third electronic device 12003 may be an annunciator platform.

As shown in FIG. 12, the first electronic device 12001 includes: a solution scheduling component 12011, a background solution synchronization component 12012, a solution issuing component 12013, an other-state request component 12014, a solution issuing response component 12015, a state request response component 12016, a light state information parsing component 12017, a pushing component 12018, an information receiving component 12019, an information sending component 12020, a transmission control protocol (tcp) connection data source 12021, an user datagram protocol (udp) connection data source 12022, a light state publishing component 12023, a caching component 12024, a relational database management system (MySQL) 12025, a data structure server (Redis) 12026, and a distributed publishing and subscribing message system (kafka) 12027.

The other-state request component 12014 is configured to request state information (the state information includes an on-line state or an off-line state, may also include an annunciator display state, or may also include a variable lane state of an intersection, etc.) of an individual annunciator from the third electronic device at a certain time interval according to annunciator road network information, and specifically according to a binding relationship between an intersection and an annunciator in the annunciator road network information to obtain the state information of the individual annunciator.

For descriptions on the annunciator road network information, the binding relationship and the state information, reference may be made to the above embodiments, and the redundant description is omitted herein.

The state request response component 12016 is configured for parsing the state information of the individual annunciator, and stores the state information of the respective annunciator in the data structure server 12026 through the caching component 12024.

The information receiving component 12019 is configured to receive original light state information sent by the third electronic device 12003 through the user datagram protocol, and send the original light state information to the light state information parsing component 12017.

For description on the original light state information, reference may be made to the embodiments, and the redundant description is omitted herein.

The light state message parsing component 12017 is configured to parse the original light state information to obtain light state information.

For description on parsing the original light state information to obtain the light state information, reference may be made to the above embodiments, and the redundant description is omitted herein.

The light state publishing component 12023 is configured to splice the respective state information and the respective light state information acquired from the data structure server 12026 to obtain respective parsed light state information, and push the respective parsed light state information to the second electronic device 12002 by the pushing component 12018.

The background solution synchronization component 12012 is configured to request to acquire background solution information (that is, original attribute information represented based on a signal control representation strategy, in particular, original signal strategy information) from the third electronic device 12003 via the transmission control protocol connection data source 12021, receive the original signal strategy information returned by the third electronic device 12003 via the transmission control protocol connection data source 12021, parse the original signal strategy information to obtain parsed strategy information, and store the respective parsed strategy information in the relational database management system 12025.

The second electronic device 12002 is configured to acquire the respective parsed strategy information from the relational database management system 12025, and determine adjustment information based on Internet data (for example, electronic maps, which may specifically be annunciator road network information), detection data of the intersections (for example, detection data detected by a geomagnetic buried in roads, detection data detected by cameras provided at the intersections, detection data detected by radar provided at the intersections, etc., the detection data including position information between respective intersections, traffic information of the intersections (including vehicle and/or pedestrian traffic information)), the respective parsed strategy information and the respective parsed light state information, and send the adjustment information to the first electronic device 12001.

The adjustment information may include: period information of a signal light, a green time ratio of the signal light, a phase difference (that is, a relative time difference between cycle beginnings of intersections) of the signal light, and phase conversion information, etc.

The relational database management system 12025 stores a time period table, and original attribute information corresponding to an individual time period, and is also provided with a solution issuing table.

Exemplarily, an individual time period may correspond to different original attribute information, for example, the original attribute information during the rush hour is different from the original attribute information during other time periods.

The solution scheduling component 12011 is configured to determine a current time period, acquires original attribute information corresponding to the current time period from the relational database management system 12025, and stores the original attribute information corresponding to the current time period back to the solution issuing table of the relational database management system 12025.

The solution issuing component 12013 is configured to poll from the solution issuing table in the relational database management system 12025, acquire the original attribute information corresponding to the current time period and adjustment information, convert the adjustment information (i.e., reverse parsing), and transmit the original attribute information corresponding to the current time period and the converted adjustment information to the third electronic device 12003 via the information sending component 12020 and the transmission control protocol connection data source 12021.

For description on the conversion of the adjustment information, reference may be made to the above embodiments, and the redundant description is omitted herein.

The third electronic device 12003 is configured to feedback, to the solution issuing response component 12015, information indicating whether the receiving is successful, and adjust signal control information of the annunciator according to the converted adjustment information.

The solution issuing response component 12015 is configured to update corresponding solution state information in the solution issuing table of the relational database management system 12025 according to the information fed back by the third electronic device 12003 indicating whether the receiving is successful.

It is worth to be noted that, in this embodiment, the components of the first electronic device 12001 are only used to exemplify the components which may constitute the first electronic device 12001, and cannot be understood as a limitation on the number or functions of the components of the first electronic device 12001.

Moreover, in combination with the above analysis, it can be known that the first electronic device 12001 and the second electronic device 12002 may be an integrated device, or may be independent devices, and this embodiment is exemplified with an example in which the first electronic device 12001 and the second electronic device 12002 are independent devices, and cannot be understood as a limitation on the forms of the first electronic device 12001 and the second electronic device 12002

It should be understood that the various forms of processes shown above may be used to reorder, add or delete steps. For example, respective steps recorded in the present application may be executed in parallel, may be executed sequentially, or may be executed in different orders, which is not limited in this text as long as desirable results of the technical solution disclosed in the present application can be achieved.

The foregoing detailed description does not constitute a limitation on the scope of the present application. It should be understood by those skilled in the art that various modifications, combinations, sub-combinations and substitutions may be made according to design requirements and other factors.

## Claims

1. An annunciator control method applied to a first electronic device, **characterized by** comprising:
acquiring (S101) original attribute information of respective annunciators, wherein the respective annunciators have different light state representation strategies and/or different signal control representation strategies, wherein a light state representation strategy is a representation method of a strategy for representing light states of a signal light, and a signal control representation strategy is a representation method of a strategy for controlling the signal light; and
parsing (S102) the respective original attribute information according to a preset reference representation strategy to obtain respective parsed attribute information corresponding to the respective original attribute information, wherein the preset reference representation strategy comprises a strategy which is a conversion standard of the signal control representation strategy and/or a strategy which is a conversion standard of the light state representation strategy, the individual piece of parsed attribute information is attribute information represented by the preset reference representation strategy, the respective parsed attribute information is used to generate adjustment information, and the adjustment information is used to adjust signal control information of at least one annunciator.

2. The method according to claim 1, wherein if the respective original attribute information comprises original light state information, the parsed attribute information comprises parsed light state information, and the preset reference representation strategy comprises a light state reference representation strategy, parsing the respective original attribute information according to the preset reference representation strategy to obtain the respective parsed attribute information corresponding to the respective original attribute information comprises:
determining (S202) a deployment region, wherein the respective annunciator is comprised in the deployment region; and
parsing (S203) the respective original light state information in the deployment region according to the light state reference representation strategy to obtain the respective parsed light state information corresponding to the respective original light state information.

3. The method according to claim 2, wherein parsing the respective original light state information in the deployment region according to the light state reference representation strategy to obtain the respective parsed light state information corresponding to the respective original light state information comprises:
acquiring annunciator road network information corresponding to the deployment region, wherein the annunciator road network information is used to characterize deployment location information of the annunciator in the deployment region; and
parsing the respective original light state information according to the light state reference representation strategy and the annunciator road network information to obtain the respective parsed light state information corresponding to the respective original light state information.

4. The method according to claim 3, wherein the annunciator road network information comprises a binding relationship between an intersection and an annunciator; parsing the respective original light state information according to the light state reference representation strategy and the annunciator road network information to obtain the respective parsed light state information corresponding to the respective original light state information comprises:
for an arbitrary annunciator, determining an intersection corresponding to the arbitrary annunciator according to the binding relationship; and
parsing the original light state information of the arbitrary annunciator according to the light state reference representation strategy to obtain parsed light state information of the intersection corresponding to the arbitrary annunciator.

5. The method according to claim 4, before determining the intersection corresponding to the arbitrary annunciator according to the binding relationship, the method further comprises:
determining an individual intersection in the deployment region;
determining an annunciator provided at the individual intersection; and
constructing a binding relationship between the individual intersection and the annunciator provided at the intersection.

6. The method according to claim 4, wherein parsing the original light state information of the arbitrary annunciator according to the light state reference representation strategy to obtain the parsed light state information of the intersection corresponding to the arbitrary annunciator comprises:
acquiring state information of the arbitrary annunciator, wherein the state information of the arbitrary annunciator is used to characterize the arbitrary annunciator being in an online state or an offline state;
converting the original light state information of the arbitrary annunciator to light state information of the intersection corresponding to the arbitrary annunciator according to the light state reference representation strategy; and
splicing the state information of the arbitrary annunciator and the light state information of the intersection corresponding to the arbitrary annunciator to obtain the parsed light state information of the intersection corresponding to the arbitrary annunciator.

7. The method according to any one of claims 1 to 6, wherein if the respective original attribute information comprises original strategy information, the parsed attribute information comprises parsed strategy information; parsing the respective original attribute information according to the preset reference representation strategy to obtain the respective parsed attribute information corresponding to the respective original attribute information comprises:
determining (S302) a corresponding type of the respective annunciator, and determining, according to the corresponding type of the respective annunciator, a signal control representation strategy which is the preset reference representation strategy; and
converting (S303) original signal strategy information different from the preset reference representation strategy based on the preset reference representation strategy to obtain corresponding parsed strategy information.

8. The method according to claim 7, wherein if the corresponding type of the annunciator comprises a ring diagram type and a stage type, the preset reference representation strategy is a signal control representation strategy corresponding to the ring diagram type.

9. The method according to any one of claims 1 to 8, wherein after parsing the respective original attribute information according to the preset reference representation strategy to obtain the respective parsed attribute information corresponding to the respective original attribute information, the method further comprises:
generating and outputting (S403) adjustment information of the respective annunciator in a same deployment region according to the parsed attribute information of the respective annunciator belonging to the same deployment region;
or
transmitting the respective parsed attribute information to a second electronic device, and receiving the adjustment information generated and transmitted by the second electronic device according to the respective parsed attribute information.

10. The method according to claim 9, wherein generating and outputting the adjustment information of the respective annunciator in the same deployment region according to the parsed attribute information of the respective annunciator belonging to the same deployment region comprises:
generating and outputting the adjustment information according to the respective parsed attribute information and annunciator road network information of the same deployment region;
wherein the annunciator road network information comprises intersection information in the same deployment region, then generating and outputting the adjustment information according to the annunciator road network information and the respective parsed attribute information comprises:
generating and outputting the adjustment information according to the intersection information and the respective parsed attribute information;
wherein generating and outputting the adjustment information according to the intersection information and the respective parsed attribute information comprises:
determining location information between respective intersections according to the intersection information, and generating and outputting the adjustment information according to the respective location information and the respective parsed attribute information; or, acquiring traffic information of an individual intersection according to the intersection information, and generating and outputting the adjustment information according to the respective traffic information and the respective parsed attribute information; or, acquiring traffic information of an individual intersection according to the intersection information, determining location information between respective intersections according to the annunciator road network information, and generating and outputting the adjustment information according to the respective traffic information, the respective location information and the respective parsed attribute information.

11. The method according to any one of claims 1 to 10, further comprising:
converting (S506) the adjustment information according to the preset reference representation strategy to obtain adjustment information of a light state representation strategy and/or a signal control representation strategy corresponding to the individual annunciator; and
transmitting (S507) the converted adjustment information to a third electronic device according to the light state representation strategy and/or the signal control representation strategy, wherein the third electronic device is an electronic device controlling an annunciator with the same light state representation strategy and/or the same signal control representation strategy.

12. An annunciator control method applied to a second electronic device, **characterized by** comprising:
receiving (S601) a plurality of pieces of parsed attribute information sent by a first electronic device, wherein a respective piece of the pieces of parsed attribute information is obtained by parsing an individual piece of original attribute information of respective annunciators according to a preset reference representation strategy, the individual piece of parsed attribute information is attribute information represented by the preset reference representation strategy, the respective annunciators have different light state representation strategies and/or different signal control representation strategies, wherein a light state representation strategy is a representation method of a strategy for representing light states of a signal light, a signal control representation strategy is a representation method of a strategy for controlling the signal light, and the preset reference representation strategy comprises a strategy which is a conversion standard of the signal control representation strategy and/or a strategy which is a conversion standard of the light state representation strategy; and
generating (S602) adjustment information according to the respective parsed attribute information and transmitting the adjustment information to the first electronic device, wherein the adjustment information is used to adjust signal control information of at least one annunciator.

13. The method according to claim 12, wherein generating the adjustment information according to the respective parsed attribute information comprises:
generating adjustment information of the respective annunciator in a same deployment region according to the parsed attribute information of the respective annunciator belonging to the same deployment region;
wherein generating the adjustment information of the respective annunciator in the same deployment region according to the parsed attribute information of the respective annunciator belonging to the same deployment region comprises:
generating the adjustment information according to the respective parsed attribute information and annunciator road network information of the same deployment region; wherein the annunciator road network information comprises intersection information in the same deployment region, then generating the adjustment information according to the respective parsed attribute information and the annunciator road network information of the same deployment region comprises:
generating the adjustment information according to the intersection information and the respective parsed attribute information;
wherein generating the adjustment information according to the intersection information and the respective parsed attribute information comprises:
determining location information between respective intersections according to the intersection information, and generating the adjustment information according to the respective location information and the respective parsed attribute information; or, acquiring traffic information of an individual intersection according to the intersection information, and generating the adjustment information according to the respective traffic information and the respective parsed attribute information; or, acquiring traffic information of an individual intersection according to the intersection information, determining location information between respective intersections according to the annunciator road network information, and generating the adjustment information according to the respective traffic information, the respective location information and the respective parsed attribute information.

14. An electronic device, comprising:
at least one processor; and
a memory in communicative connection with the at least one processor; **characterized in that**
the memory stores instructions executable by the at least one processor, the instructions are executed by the at least one processor to enable the at least one processor to execute the method according to any one of claims 1 to 11 or the method according to claim 12 or 13.

15. A non-transient computer readable storage medium storing computer instructions, **characterized in that** the computer instructions are used to enable a computer to execute the method according to any one of claims 1 to 11 or the method according to claim 12 or 13.

## Patentansprüche

1. Verfahren zum Steuern eines Signalgebers, das auf eine erste elektronische Vorrichtung angewendet wird, **dadurch gekennzeichnet, dass** es umfasst:
Erfassen (S101) von ursprünglichen Attributinformationen von jeweiligen Signalgebern, wobei die jeweiligen Signalgeber unterschiedliche Lichtzustandsdarstellungsstrategien und/oder unterschiedliche Signalsteuerungsdarstellungsstrategien aufweisen, wobei eine Lichtzustandsdarstellungsstrategie ein Darstellungsverfahren einer Strategie zum Darstellen von Lichtzuständen eines Signallichts ist, und eine Signalsteuerdarstellungsstrategie ein Darstellungsverfahren einer Strategie zum Steuern des Signallichts ist; und
Parsen (S102) der jeweiligen ursprünglichen Attributinformation gemäß einer voreingestellten Referenzdarstellungsstrategie, um jeweilige geparste Attributinformationen zu erhalten, die den jeweiligen ursprünglichen Attributinformationen entsprechen, wobei die voreingestellte Referenzdarstellungsstrategie eine Strategie, die ein Konvertierungsstandard der Signalsteuerdarstellungsstrategie ist und/oder eine Strategie umfasst, die ein Konvertierungsstandard der Lichtzustandsdarstellungsstrategie ist, das einzelne Stück geparster Attributinformationen Attributinformationen sind, die durch die voreingestellte Referenzdarstellungsstrategie dargestellt werden, die jeweiligen geparsten Attributinformationen verwendet werden, um Anpassungsinformationen zu erzeugen, und die Anpassungsinformationen verwendet werden, um Signalsteuerinformationen von wenigstens einem Signalgeber anzupassen.

2. Verfahren nach Anspruch 1, wobei, wenn die jeweiligen ursprünglichen Attributinformationen ursprüngliche Lichtzustandsinformationen umfassen, die geparsten Attributinformationen geparste Lichtzustandsinformationen umfassen und die voreingestellte Referenzdarstellungsstrategie eine Lichtzustandsreferenzdarstellungsstrategie umfasst, das Parsen der jeweiligen ursprünglichen Attributinformationen gemäß der voreingestellten Referenzdarstellungsstrategie, um die jeweiligen geparsten Attributinformationen zu erhalten, die den jeweiligen ursprünglichen Attributinformationen entsprechen, umfasst:
Bestimmen (S202) einer Inbetriebnameregion, wobei der jeweilige Signalgeber in der Inbetriebnahmeregion enthalten ist; und
Parsen (S203) der jeweiligen ursprünglichen Lichtzustandsinformationen in der Inbetriebnahmeregion gemäß der Lichtzustandsreferenzdarstellungsstrategie, um die jeweiligen analysierten Lichtzustandsinformationen zu erhalten, die den jeweiligen ursprünglichen Lichtzustandsinformationen entsprechen.

3. Verfahren nach Anspruch 2, wobei das Parsen der jeweiligen ursprünglichen Lichtzustandsinformationen in der Inbetriebnahmeregion gemäß der Lichtzustandsreferenzdarstellungsstrategie, um die jeweiligen analysierten Lichtzustandsinformationen zu erhalten, die den jeweiligen ursprünglichen Lichtzustandsinformationen entsprechen, umfasst:
Erfassen von Informationen über das Straßennetz des Signalgebers, die der Inbetriebnahmeregion entsprechen, wobei die Informationen über das Straßennetz des Signalgebers verwendet werden, um Informationen über den Inbetriebnahmeort des Signalgebers in der Inbetriebnahmeregion zu kennzeichnen; und
Parsen der jeweiligen ursprünglichen Lichtzustandsinformationen gemäß der Lichtzustandsreferenzdarstellungsstrategie und den Informationen über das Straßennetz des Signalgebers, um die jeweiligen analysierten Lichtzustandsinformationen zu erhalten, die den jeweiligen ursprünglichen Lichtzustandsinformationen entsprechen.

4. Verfahren nach Anspruch 3, wobei die Informationen über das Straßennetz des Signalgebers eine Bindungsbeziehung zwischen einer Kreuzung und einem Signalgeber umfassen; das Parsen der jeweiligen ursprünglichen Lichtzustandsinformationen gemäß der Lichtzustandsreferenzdarstellungsstrategie und den Informationen über das Straßennetz des Signalgebers, um die jeweiligen analysierten Lichtzustandsinformationen zu erhalten, die den jeweiligen ursprünglichen Lichtzustandsinformationen entsprechen, umfasst:
für einen beliebigen Signalgeber Bestimmen einer Kreuzung, die dem beliebigen Signalgeber entspricht, gemäß der Bindungsbeziehung; und
Parsen der ursprünglichen Lichtzustandsinformationen des beliebigen Signalgebers gemäß der Strategie der Lichtzustandsreferenzdarstellung, um geparste Lichtzustandsinformationen der Kreuzung zu erhalten, die dem beliebigen Signalgeber entsprechen.

5. Verfahren nach Anspruch 4, wobei das Verfahren vor dem Bestimmen der Kreuzung, die dem beliebigen Signalgeber gemäß der Bindungsbeziehung entspricht, ferner umfasst:
Bestimmen einer einzelnen Kreuzung in der Inbetriebnahmeregion;
Bestimmen eines Signalgebers, der an der einzelnen Kreuzung bereitgestellt ist; und
Aufbauen einer Bindungsbeziehung zwischen der einzelnen Kreuzung und dem an der Kreuzung bereitgestellten Signalgeber.

6. Verfahren nach Anspruch 4, wobei das Parsen der ursprünglichen Lichtzustandsinformationen des beliebigen Signalgebers gemäß der Strategie der Lichtzustandsreferenzdarstellung, um die geparsten Lichtzustandsinformationen der Kreuzung zu erhalten, die dem beliebigen Signalgeber entsprechen, umfasst:
Erfassen von Zustandsinformationen des beliebigen Signalgebers, wobei die Zustandsinformationen des beliebigen Signalgebers verwendet werden, um zu kennzeichnen, ob sich der beliebige Signalgeber in einem Online-Zustand oder in einem Offline-Zustand befindet;
Umwandeln der ursprünglichen Lichtzustandsinformation des beliebigen Signalgebers in Lichtzustandsinformation der dem beliebigen Signalgeber entsprechenden Kreuzung gemäß der Lichtzustandsreferenzdarstellungsstrategie, und
Spleißen der Zustandsinformation des beliebigen Signalgebers und der Lichtzustandsinformation der dem beliebigen Signalgeber entsprechenden Kreuzung, um die geparsten Lichtzustandsinformationen der dem beliebigen Signalgeber entsprechenden Kreuzung zu erhalten.

7. Verfahren nach einem der Ansprüche 1 bis 6, wobei, wenn die jeweiligen ursprünglichen Attributinformationen ursprüngliche Strategieinformationen umfassen, die geparsten Attributinformationen geparste Strategieinformationen umfassen, das Parsen der jeweiligen ursprünglichen Attributinformationen gemäß der voreingestellten Referenzdarstellungsstrategie, um die jeweiligen geparsten Attributinformationen zu erhalten, die den jeweiligen ursprünglichen Attributinformationen entsprechen, umfasst:
Bestimmen (S302) eines entsprechenden Typs des jeweiligen Signalgebers, und Bestimmen einer Signalsteuerdarstellungsstrategie, die die voreingestellte Referenzdarstellungsstrategie ist, gemäß dem entsprechenden Typ des jeweiligen Signalgebers; und
Umwandeln (S303) von ursprünglichen Signalstrategieinformationen, die sich von der voreingestellten Referenzdarstellungsstrategie unterscheiden, auf Grundlage der voreingestellten Referenzdarstellungsstrategie, um entsprechende geparste Strategieinformationen zu erhalten.

8. Verfahren nach Anspruch 7, wobei, wenn der entsprechende Typ des Signalgebers einen Ringdiagrammtyp und einen Stufentyp umfasst, die voreingestellte Referenzdarstellungsstrategie eine Signalsteuerdarstellungsstrategie ist, die dem Ringdiagrammtyp entspricht.

9. Verfahren nach einem der Ansprüche 1 bis 8, wobei nach dem Parsen der jeweiligen ursprünglichen Attributinformationen gemäß der voreingestellten Referenzdarstellungsstrategie, um die jeweiligen geparsten Attributinformationen zu erhalten, die den jeweiligen ursprünglichen Attributinformationen entsprechen, das Verfahren ferner umfasst:
Erzeugen und Ausgeben (S403) von Anpassungsinformationen des jeweiligen Signalgebers in einer gleichen Inbetriebnahmeregion gemäß den geparsten Attributinformationen des jeweiligen Signalgebers, der zu der gleichen Inbetriebnahmeregion gehört; oder
Übertragen der jeweiligen geparsten Attributinformationen an eine zweite elektronische Vorrichtung und Empfangen der von der zweiten elektronischen Vorrichtung gemäß den jeweiligen geparsten Attributinformationen erzeugten und übertragenen Anpassungsinformationen.

10. Verfahren nach Anspruch 9, wobei das Erzeugen und Ausgeben von Anpassungsinformationen des jeweiligen Signalgebers in einer gleichen Inbetriebnahmeregion gemäß den geparsten Attributinformationen des jeweiligen Signalgebers, der zu der gleichen Inbetriebnahmeregion gehört, umfasst:
Erzeugen und Ausgeben der Anpassungsinformationen gemäß den jeweiligen geparsten Attributinformationen und den Informationen über das Straßennetz des Signalgebers in der gleichen Inbetriebnahmeregion;
wobei die Informationen über das Straßennetz des Signalgebers Kreuzungsinformationen in der gleichen Inbetriebnahmeregion umfassen, dann das Erzeugen und das Ausgeben der Anpassungsinformationen gemäß den Informationen über das Straßennetz des Signalgebers und den jeweiligen geparsten Attributinformationen umfasst:
Erzeugen und Ausgeben der Anpassungsinformationen gemäß den Kreuzungsinformationen und den jeweiligen geparsten Attributinformationen;
wobei das Erzeugen und Ausgeben der Anpassungsinformationen gemäß den Kreuzungsinformationen und den jeweiligen geparsten Attributinformationen umfasst:
Erfassen von Standortinformationen zwischen jeweiligen Kreuzungen gemäß den Kreuzungsinformationen und Erzeugen und Ausgeben der Anpassungsinformationen gemäß den jeweiligen Standortinformationen und den jeweiligen geparsten Attributinformationen; oder Erfassen von Standortinformationen einer einzelnen Kreuzung gemäß den Kreuzungsinformationen und Erzeugen und Ausgeben der Anpassungsinformationen gemäß den jeweiligen Verkehrsinformationen und den jeweiligen geparsten Attributinformationen; oder das Erfassen von Verkehrsinformationen einer einzelnen Kreuzung gemäß den Kreuzungsinformationen, das Bestimmen von Standortinformationen zwischen jeweiligen Kreuzungen gemäß den Informationen über das Straßennetz des Signalgebers und das Erzeugen und Ausgeben der Anpassungsinformationen gemäß den jeweiligen Verkehrsinformationen, den jeweiligen Standortinformationen und den jeweiligen geparsten Attributinformationen.

11. Verfahren nach einem der Ansprüche 1 bis 10, das ferner umfasst:
Umwandeln (S506) der Anpassungsinformationen gemäß der voreingestellten Referenzdarstellungsstrategie, um Anpassungsinformationen einer Lichtzustandsdarstellungsstrategie und/oder einer Signalsteuerdarstellungsstrategie zu erhalten, die dem einzelnen Signalgeber entsprechen; und
Übertragen (S507) der umgewandelten Anpassungsinformationen an eine dritte elektronische Vorrichtung gemäß der Lichtzustandsdarstellungsstrategie und/oder der Signalsteuerdarstellungsstrategie, wobei die dritte elektronische Vorrichtung eine elektronische Vorrichtung ist, die einen Signalgeber mit der gleichen Lichtzustandsdarstellungsstrategie und/oder der gleichen Signalsteuerdarstellungsstrategie steuert.

12. Verfahren zum Steuern eines Signalgebers, das auf einer zweiten elektronische Vorrichtung angewendet wird, **dadurch gekennzeichnet, dass** es umfasst:
Empfangen (S601) einer Mehrzahl von Stücken geparster Attributinformationen, die von einer ersten elektronischen Vorrichtung gesendet werden, wobei ein jeweiliges Stück der Stücke geparster Attributinformationen durch Parsen eines einzelnen Stücks ursprünglicher Attributinformationen jeweiliger Signalgeber gemäß einer voreingestellten Referenzdarstellungsstrategie erhalten wird, wobei das einzelne Stück geparster Attributinformationen Attributinformationen sind, die durch die voreingestellte Referenzdarstellungsstrategie dargestellt werden, wobei die jeweiligen Signalgeber unterschiedliche Lichtzustandsdarstellungsstrategien und/oder unterschiedliche Signalsteuerdarstellungsstrategien aufweisen, wobei eine Lichtzustandsdarstellungsstrategie ein Darstellungsverfahren einer Strategie zum Darstellen von Lichtzuständen eines Signallichts ist, eine Signalsteuerdarstellungsstrategie ein Darstellungsverfahren einer Strategie zum Steuern des Signallichts ist, und die voreingestellte Referenzdarstellungsstrategie eine Strategie, die ein Konvertierungsstandard der Signalsteuerdarstellungsstrategie ist und/oder eine Strategie umfasst, die ein Konvertierungsstandard der Lichtzustandsdarstellungsstrategie ist; und
Erzeugen (S602) von Anpassungsinformationen gemäß den jeweiligen geparsten Attributinformationen und Übertragen der Anpassungsinformationen an die erste elektronische Vorrichtung, wobei die Anpassungsinformationen verwendet werden, um Signalsteuerinformationen von wenigstens einem Signalgeber anzupassen.

13. Verfahren nach Anspruch 12, wobei das Erzeugen der Anpassungsinformation gemäß den jeweiligen geparsten Attributinformationen umfasst:
Erzeugen von Anpassungsinformationen des jeweiligen Signalgebers in einer gleichen Inbetriebnahmeregion gemäß den geparsten Attributinformationen des jeweiligen Signalgebers, der zu der gleichen Inbetriebnahmeregion gehört;
wobei das Erzeugen der Anpassungsinformationen des jeweiligen Signalgebers in der gleichen Inbetriebnahmeregion gemäß den geparsten Attributinformationen des jeweiligen Signalgebers, der zu der gleichen Inbetriebnahmeregion gehört, umfasst:
Erzeugen der Anpassungsinformation gemäß den jeweiligen geparsten Attributinformationen und den Informationen über das Straßennetz des Signalgebers der gleichen Inbetriebnahmeregion; wobei die Informationen über das Straßennetz des Signalgebers Kreuzungsinformation in der gleichen Inbetriebnahmeregion umfassen, dann das Erzeugen der Anpassungsinformation gemäß den jeweiligen geparsten Attributinformationen und den Informationen über das Straßennetz des Signalgebers der gleichen Inbetriebnahmeregion umfasst:
Erzeugen der Anpassungsinformationen gemäß den Kreuzungsinformationen und den jeweiligen geparsten Attributinformationen;
wobei das Erzeugen der Anpassungsinformationen gemäß den Kreuzungsinformationen und den jeweiligen geparsten Attributinformationen umfasst:
Bestimmen von Standortinformationen zwischen jeweiligen Kreuzungen gemäß den Kreuzungsinformationen und Erzeugen der Anpassungsinformationen gemäß den jeweiligen Standortinformationen und den jeweiligen geparsten Attributinformationen; oder Erfassen von Standortinformationen einer einzelnen Kreuzung gemäß den Kreuzungsinformationen und Erzeugen der Anpassungsinformationen gemäß den jeweiligen Verkehrsinformationen und den jeweiligen geparsten Attributinformationen; oder das Erfassen von Verkehrsinformationen einer einzelnen Kreuzung gemäß den Kreuzungsinformationen, das Bestimmen von Standortinformationen zwischen jeweiligen Kreuzungen gemäß den Informationen über das Straßennetz des Signalgebers und das Erzeugen der Anpassungsinformationen gemäß den jeweiligen Verkehrsinformationen, den jeweiligen Standortinformationen und den jeweiligen geparsten Attributinformationen.

14. Elektronische Vorrichtung, umfassend:
wenigstens einen Prozessor; und
einen Speicher, der mit dem wenigstens einen Prozessor kommuniziert; **dadurch gekennzeichnet, dass**
der Speicher Anweisungen speichert, die von dem wenigstens einen Prozessor ausführbar sind, wobei die Anweisungen von dem wenigstens einen Prozessor ausgeführt werden, um den wenigstens einen Prozessor in die Lage zu versetzen, das Verfahren nach einem der Ansprüche 1 bis 11 oder das Verfahren nach Anspruch 12 oder 13 auszuführen.

15. Nichtflüchtiges, computerlesbares Speichermedium, das Computeranweisungen speichert, **dadurch gekennzeichnet, dass** die Computeranweisungen verwendet werden, um einen Computer in die Lage zu versetzen, das Verfahren nach einem der Ansprüche 1 bis 11 oder das Verfahren nach Anspruch 12 oder 13 auszuführen.

## Revendications

1. Procédé de commande d'annonciateur appliqué à un premier dispositif électronique, **caractérisé en ce qu'**il comprend :
l'acquisition (S101) d'informations d'attribut d'origine d'annonciateurs respectifs, dans lequel les annonciateurs respectifs ont différentes stratégies de représentation d'état de lumière et/ou différentes stratégies de représentation de commande de signal, dans lequel une stratégie de représentation d'état de lumière est un procédé de représentation d'une stratégie pour représenter les états de lumière d'un signal de lumière, et une stratégie de représentation de commande de signal est un procédé de représentation d'une stratégie pour commander le signal de lumière ; et l'analyse (S102) des informations d'attribut d'origine respectives selon une stratégie de représentation de référence prédéfinie pour obtenir des informations d'attribut analysées respectives correspondant aux informations d'attribut d'origine respectives, dans lequel la stratégie de représentation de référence prédéfinie comprend une stratégie qui est une norme de conversion de la stratégie de représentation de commande de signal et/ou une stratégie qui est une norme de conversion de la stratégie de représentation d'état de lumière, l'élément individuel d'informations d'attribut analysé représente des informations d'attribut représentées par la stratégie de représentation de référence prédéfinie, les informations d'attribut analysées respectives sont utilisées pour générer des informations d'ajustement, et les informations d'ajustement sont utilisées pour ajuster des informations de commande de signal d'au moins un annonciateur.

2. Procédé selon la revendication 1, dans lequel si les informations d'attribut d'origine respectives comprennent des informations d'état de lumière d'origine, les informations d'attribut analysées comprennent des informations d'état de lumière analysées, et la stratégie de représentation de référence prédéfinie comprend une stratégie de représentation de référence d'état de lumière, l'analyse des informations d'attribut d'origine respectives selon la stratégie de représentation de référence prédéfinie pour obtenir les informations d'attribut analysées respectives correspondant aux informations d'attribut d'origine respectives comprend :
la détermination (S202) d'une région de déploiement, dans laquelle l'annonciateur respectif est compris dans la région de déploiement ; et
l'analyse (S203) des informations d'état de lumière d'origine respectives dans la région de déploiement selon la stratégie de représentation de référence d'état de lumière pour obtenir les informations d'état de lumière analysées respectives correspondant aux informations d'état de lumière d'origine respectives.

3. Procédé selon la revendication 2, dans lequel l'analyse des informations d'état de lumière d'origine respectives dans la région de déploiement selon la stratégie de représentation de référence d'état de lumière pour obtenir les informations d'état de lumière analysées respectives correspondant aux informations d'état de lumière d'origine respectives comprend :
l'acquisition d'informations de réseau routier d'annonciateur correspondant à la région de déploiement, les informations de réseau routier d'annonciateur étant utilisées pour caractériser des informations de localisation de déploiement de l'annonciateur dans la région de déploiement ; et
l'analyse des informations d'état de lumière d'origine respectives selon la stratégie de représentation de référence d'état de lumière et les informations de réseau routier d'annonciateur pour obtenir les informations d'état de lumière analysées respectives correspondant aux informations d'état de lumière d'origine respectives.

4. Procédé selon la revendication 3, dans lequel les informations de réseau routier d'annonciateur comprennent une relation de liaison entre une intersection et un annonciateur ; l'analyse des informations d'état de lumière d'origine respectives selon la stratégie de représentation de référence d'état de lumière et les informations de réseau routier d'annonciateur pour obtenir les informations d'état de lumière d'origine analysées respectives correspondant aux informations d'état de lumière d'origine respectives comprend :
pour un annonciateur arbitraire, la détermination d'une intersection correspondant à l'annonciateur arbitraire selon la relation de liaison ; et
l'analyse des informations d'état de lumière d'origine de l'annonciateur arbitraire selon la stratégie de représentation de référence d'état de lumière pour obtenir des informations d'état de lumière analysées de l'intersection correspondant à l'annonciateur arbitraire.

5. Procédé selon la revendication 4, avant la détermination de l'intersection correspondant à l'annonciateur arbitraire selon la relation de liaison, le procédé comprend en outre :
la détermination d'une intersection individuelle dans la région de déploiement ;
la détermination d'un annonciateur prévu à l'intersection individuelle ; et
la construction d'une relation de liaison entre l'intersection individuelle et l'annonciateur prévu à l'intersection.

6. Procédé selon la revendication 4, dans lequel l'analyse des informations d'état de lumière d'origine de l'annonciateur arbitraire selon la stratégie de représentation de référence d'état de lumière pour obtenir les informations d'état de lumière analysées de l'intersection correspondant à l'annonciateur arbitraire comprend :
l'acquisition d'informations d'état de l'annonciateur arbitraire, dans lequel les informations d'état de l'annonciateur arbitraire sont utilisées pour caractériser l'annonciateur arbitraire étant dans un état en ligne ou un état hors ligne ;
la conversion des informations d'état de lumière d'origine de l'annonciateur arbitraire en informations d'état de lumière de l'intersection correspondant à l'annonciateur arbitraire selon la stratégie de représentation de référence d'état de lumière ; et
l'épissage des informations d'état de l'annonciateur arbitraire et des informations d'état de lumière de l'intersection correspondant à l'annonciateur arbitraire pour obtenir les informations d'état de lumière analysées de l'intersection correspondant à l'annonciateur arbitraire.

7. Procédé selon l'une quelconque des revendications 1 à 6, dans lequel si les informations d'attribut d'origine respectives comprennent des informations de stratégie d'origine, les informations d'attribut analysées comprennent des informations de stratégie analysées ; l'analyse des informations d'attribut d'origine respectives selon la stratégie de représentation de référence prédéfinie pour obtenir les informations d'attribut analysées respectives correspondant aux informations d'attribut d'origine respectives comprend :
la détermination (S302) d'un type correspondant de l'annonciateur respectif, et la détermination, selon le type correspondant de l'annonciateur respectif, d'une stratégie de représentation de commande de signal qui est la stratégie de représentation de référence prédéfinie ; et
la conversion (S303) d'informations de stratégie de signal d'origine différentes de la stratégie de représentation de référence prédéfinie sur la base de la stratégie de représentation de référence prédéfinie pour obtenir des informations de stratégie analysées correspondantes.

8. Procédé selon la revendication 7, dans lequel si le type correspondant de l'annonciateur comprend un type de diagramme en anneau et un type d'étage, la stratégie de représentation de référence prédéfinie est une stratégie de représentation de commande de signal correspondant au type de diagramme en anneau.

9. Procédé selon l'une quelconque des revendications 1 à 8, dans lequel après l'analyse des informations d'attribut d'origine respectives selon la stratégie de représentation de référence prédéfinie pour obtenir les informations d'attribut analysées respectives correspondant aux informations d'attribut d'origine respectives, le procédé comprend en outre :
la génération et la sortie (S403) d'informations d'ajustement de l'annonciateur respectif dans une même région de déploiement selon les informations d'attribut analysées de l'annonciateur respectif appartenant à la même région de déploiement ; ou
la transmission des informations d'attribut analysées respectives à un deuxième dispositif électronique, et la réception des informations d'ajustement générées et transmises par le deuxième dispositif électronique selon les informations d'attribut analysées respectives.

10. Procédé selon la revendication 9, dans lequel la génération et la sortie des informations d'ajustement de l'annonciateur respectif dans la même région de déploiement selon les informations d'attribut analysées de l'annonciateur respectif appartenant à la même région de déploiement comprend :
la génération et la sortie des informations d'ajustement selon les informations d'attribut analysées respectives et les informations de réseau routier d'annonciateur respectives de la même région de déploiement ;
dans lequel les informations de réseau routier d'annonciateur comprennent des informations d'intersection dans la même région de déploiement, puis la génération et la sortie des informations d'ajustement selon les informations de réseau routier d'annonciateur et les informations d'attribut analysées respectives comprennent :
la génération et la sortie des informations d'ajustement selon les informations d'intersection et les informations d'attribut analysées respectives ;
dans lequel la génération et la sortie des informations d'ajustement selon les informations d'intersection et les informations d'attribut analysées respectives comprennent :
la détermination d'informations de localisation entre des intersections respectives selon les informations d'intersection, et la génération et la sortie des informations d'ajustement selon les informations de localisation respectives et les informations d'attribut analysées respectives ; ou,
l'acquisition d'informations de trafic d'une intersection individuelle selon les informations d'intersection, et la génération et la sortie des informations d'ajustement selon les informations de trafic respectives et les informations d'attribut analysées respectives ; ou, l'acquisition d'informations de trafic d'une intersection individuelle selon les informations d'intersection, la détermination d'informations de localisation entre des intersections respectives selon les informations de réseau routier d'annonciateur, et la génération et la sortie des informations d'ajustement selon les informations de trafic respectives, les informations de localisation respectives et les informations d'attribut analysées.

11. Procédé selon l'une quelconque des revendications 1 à 10, comprenant en outre :
la conversion (S506) des informations d'ajustement selon la stratégie de représentation de référence prédéfinie pour obtenir des informations d'ajustement d'une stratégie de représentation d'état de lumière et/ou d'une stratégie de représentation de commande de signal correspondant à l'annonciateur individuel ; et
la transmission (S507) des informations d'ajustement converties à un troisième dispositif électronique selon la stratégie de représentation d'état de lumière et/ou la stratégie de représentation de commande de signal, dans lequel le troisième dispositif électronique est un dispositif électronique commandant un annonciateur avec la même stratégie de représentation d'état de lumière et /ou la même stratégie de représentation de commande de signal.

12. Procédé de commande d'annonciateur appliqué à un deuxième dispositif électronique, **caractérisé en ce qu'**il comprend :
la réception (S601) d'une pluralité d'éléments d'informations d'attribut analysés envoyés par un premier dispositif électronique, dans lequel un élément respectif des éléments d'informations d'attribut analysé est obtenu par l'analyse d'un élément individuel d'informations d'attribut d'origine d'annonciateurs respectifs selon une stratégie de représentation de référence prédéfinie, l'élément individuel d'informations d'attribut analysé représente des informations d'attribut représentées par la stratégie de représentation de référence prédéfinie, les annonciateurs respectifs ont différentes stratégies de représentation d'état de lumière et/ou différentes stratégies de représentation de commande de signal, dans lequel une stratégie de représentation d'état de lumière est un procédé de représentation d'une stratégie pour représenter des états de lumière d'un signal de lumière, une stratégie de représentation de commande de signal est un procédé de représentation d'une stratégie pour commander le signal de lumière, et la stratégie de représentation de référence prédéfinie comprend une stratégie qui est une norme de conversion de la stratégie de représentation de commande de signal et/ou une stratégie qui est une norme de conversion de la stratégie de représentation d'état de lumière ; et
la génération (S602) d'informations d'ajustement selon les informations d'attribut analysées respectives et la transmission des informations d'ajustement au premier dispositif électronique, dans lequel les informations d'ajustement sont utilisées pour ajuster les informations de commande de signal d'au moins un annonciateur.

13. Procédé selon la revendication 12, dans lequel la génération des informations d'ajustement selon les informations d'attribut analysées respectives comprend :
la génération d'informations d'ajustement de l'annonciateur respectif dans une même région de déploiement selon les informations d'attribut analysées de l'annonciateur respectif appartenant à la même région de déploiement ;
dans lequel la génération des informations d'ajustement de l'annonciateur respectif dans la même région de déploiement selon les informations d'attribut analysées de l'annonciateur respectif appartenant à la même région de déploiement comprend :
la génération des informations d'ajustement selon les informations d'attribut analysées respectives et les informations de réseau routier d'annonciateur de la même région de déploiement ; dans lequel les informations de réseau routier d'annonciateur comprennent des informations d'intersection dans la même région de déploiement, puis la génération des informations d'ajustement selon les informations d'attribut analysées respectives et les informations de réseau routier d'annonciateur de la même région de déploiement comprend :
la génération des informations d'ajustement selon les informations d'intersection et les informations d'attribut analysées respectives ;
dans lequel la génération des informations d'ajustement selon les informations d'intersection et les informations d'attribut analysées respectives comprend :
la détermination des informations de localisation entre les intersections respectives selon les informations d'intersection, et la génération des informations d'ajustement selon les informations de localisation respectives et les informations d'attribut analysées respectives ; ou, l'acquisition d'informations de trafic d'une intersection individuelle selon les informations d'intersection, et la génération des informations d'ajustement selon les informations de trafic respectives et les informations d'attribut analysées respectives ; ou, l'acquisition d'informations de trafic d'une intersection individuelle selon les informations d'intersection, la détermination d'informations de localisation entre des intersections respectives selon les informations de réseau routier d'annonciateur, et la génération des informations d'ajustement selon les informations de trafic respectives, les informations de localisation respectives et les informations d'attribut analysées respectives.

14. Dispositif électronique, comprenant :
au moins un processeur ; et
une mémoire en connexion de communication avec l'au moins un processeur ;
**caractérisé en ce que**
la mémoire stocke des instructions exécutables par l'au moins un processeur, les instructions sont exécutées par l'au moins un processeur pour permettre à l'au moins un processeur d'exécuter le procédé selon l'une quelconque des revendications 1 à 11 ou le procédé selon revendication 12 ou 13.

15. Support de stockage non transitoire lisible par ordinateur stockant des instructions informatiques, **caractérisé en ce que** les instructions informatiques sont utilisées pour permettre à un ordinateur d'exécuter le procédé selon l'une quelconque des revendications 1 à 11 ou le procédé selon la revendication 12 ou 13.
